(19) Europäisches Patentamt
European Patent Office
Office européen des brevets

(11) **EP 1 944 569 B1**

(12) **EUROPÄISCHE PATENTSCHRIFT**

(45) Veröffentlichungstag und Bekanntmachung des Hinweises auf die Patenterteilung:
**11.07.2012 Patentblatt 2012/28**

(51) Int Cl.:
***G01B 11/25*** *(2006.01)*

(21) Anmeldenummer: **08000587.9**

(22) Anmeldetag: **14.01.2008**

(54) **Verfahren und Vorrichtung zum optischen Ausmessen eines Objekts, insbesondere eines Werkstücks oder Werkzeugs**

Method and device for optical measurement of an object in particular of a workpiece or tool

Procédé et dispositif destinés à la mesure optique d'un objet, en particulier d'une pièce à usiner ou d'un outil

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **15.01.2007 DE 102007002880**

(43) Veröffentlichungstag der Anmeldung:
**16.07.2008 Patentblatt 2008/29**

(73) Patentinhaber: **DMG Microset GmbH**
**33689 Bielefeld (DE)**

(72) Erfinder:
• **Melzer, Udo**
**33335 Gütersloh (DE)**
• **Wehmeyer, Klaus**
**32051 Herford (DE)**
• **Kaschuba, Christina**
**33619 Bielefeld (DE)**

(74) Vertreter: **Müller, Frank**
**Ter Meer, Steinmeister & Partner GbR**
**Artur-Ladebeck-Strasse 51**
**33617 Bielefeld (DE)**

(56) Entgegenhaltungen:
EP-A- 1 767 897        EP-A2- 1 726 914
WO-A-2006/134793        DE-A1- 10 321 888
DE-U1-202005 003 352        US-A- 6 040 910
US-A- 6 147 760        US-A1- 2003 057 365

## Beschreibung

Die vorliegende Erfindung betrifft ein Verfahren sowie eine Vorrichtung zum optischen Vermessen eines Objekts, insbesondere eines Werkstücks oder Werkzeugs.

Dokument DE 103 21 888 A1 offenbart ein Messverfahren und einen Sensor zur optischen Abtastung bewegter Objekte, wobei ein zum Sensor feststehendes strukturiertes Lichtfeld im Objektraum geschaffen wird und im Erfassungsvorgang kontinuierlich Bilder aufgenommen werden. Jedem Objektpunkt wird ein virtuelles Pixel zugeordnet, welches dem bewegten Objektpunkt folgt. Die bewegten Objektpunkte besitzen jeweils eine Bewegungsbahn. Im Messvorgang wird eine Bildserie mittels einer elektronischen Kamera in einem Beobachtungsstrahlengang erzeugt. Es besteht stets ein Winkel zwischen der Tangente an die Bewegungsbahn eines jeden Objektpunktes und der Tangente an eine Schärfefläche im strukturierten Lichtfeld im Durchstoßpunkt jeder Bewegungsbahn durch die Schärfefläche. Der Winkel ist erfindungsgemäß jeweils größer als mindestens 1°. In den virtuellen Pixeln entstehen Signale in der Form von Weißlicht-Interferogrammen.

Dokument WO 2006/134793 A1 offenbart eine Vorrichtung zur Projektion eines Lichtmusters auf ein Objekt. Das Licht einer Lichtquelle wird optisch moduliert mit Hilfe eines Modulationskörpers mit unterschiedlichen Bereichen, die das einfallende Licht in Abhängigkeit von seinen Strahlungswinkeleigenschaften passieren lassen.

Dokument US 6,040,910 A offenbart ein optisches System zur Oberflächenabtastung eines Objekts, mit einem Projektions system zur Ausrichtung eines einfallenden Lichtstrahls mit einem variierenden Intensitätsmuster auf eine Objektoberfläche. Das variierende Intensitätsmuster des einfallenden Lichtstrahls wird räumlich verschoben. Eine Detektoranordnung dient zur Aufnahme einer Gitterabbildung der Oberfläche, während ein Verarbeitungssystem daraus ein Oberflächenprofil errechnet.

Ferner offenbart Dokument DE 20 2005 003352 U 1 eine Sensoranordnung zur dreidimensionalen Lageerkennung und Überwachung eines Werkzeugs mit drei Kameras, die so angeordnet sind, dass eine Bereich von 360° um das Werkzeug herum erfasst wird.

Dokument EP 1 726 914 A2 offenbart eine Vorrichtung und ein Verfahren zur Bestimmung der Form eines Objekts, bei welchem eine farbige Lichtquelle eingesetzt wird.

Derartige Verfahren werden insbesondere zur Voreinstellung von Dreh-oder Fräswerkzeugen verwendet, die in einem nachfolgenden Fertigungsprozess eingesetzt werden. Das Einrichten des Werkzeugs geschieht außerhalb des Fertigungssystems in einem Vermessungssystem, in welchem das Werkzeug eingespannt und auf vorgegebene Maße eingestellt wird. Zu diesem Zweck wird das zu vermessende Objekt optisch erfasst. Eine bekannte Möglichkeit besteht in der Aufnahme der Konturen des Werkzeugs im Durchlichtverfahren durch eine Kamera, die an ein Bildverarbeitungssystem angeschlossen ist. Diese wertet das Kamerabild rechnerisch aus und stellt die so erhaltenen Daten für weitere Arbeitsschritte zur Verfügung, wie beispielsweise eine grafische Darstellung auf einem Bildschirm, eine Simulation oder dergleichen.

Mit Hilfe dieses Verfahrens läßt sich jedoch lediglich ein zweidimensionales Bild des Werkzeugs gewinnen. Die dreidimensionale Form läßt sich hieraus nicht erschließen. Es ist zwar möglich, ein weiteres Kamerabild aus einer anderen Raumrichtung aufzunehmen und auf diese Weise die gewünschte räumliche Information zu gewinnen, beispielsweise durch Triangulation. Das Vermessungssystem wird hierdurch jedoch aufwendig und kostspielig, und die Messgenauigkeit bleibt auch in diesem Fall unter den Anforderungen, die in diesem Bereich häufig gestellt werden. Es existieren zwar mittlerweile Verfahren zur Ermittlung der dreidimensionalen Koordinaten von Oberflächenpunkten, die mit einer einzigen Kamera auskommen, wie beispielsweise in der Patentschrift EP 1 242 786 beschrieben. Hier wird ein farblich codiertes Auflichtmuster auf das Messobjekt projiziert und abgebildet. Für bestimmte Anwendungen wie z. B. das oben beschriebene Einrichten von Werkzeugen ist dieses Verfahren jedoch nicht geeignet. Insbesondere bleibt die Ortsauflösung auch hier unzureichend. Aufgabe der vorliegenden Erfindung ist es daher, ein optisches Meßverfahren der eingangs genannten Art zu schaffen, das eine exakte Rekonstruktion der dreidimensionalen Form des zu vermessenden Objekts in hoher Auflösung bei kurzen Messzeiten und relativ geringen Kosten erlaubt. Eine weitere Aufgabe liegt in der Schaffung einer Vorrichtung, mit deren Hilfe sich ein derartiges Verfahren durchführen läßt.

Diese Aufgaben werden erfindungsgemäß durch ein Verfahren mit den Merkmalen des Anspruchs 1 sowie durch eine Vorrichtung gemäß Anspruch 9 gelöst.

Bei dem erfindungsgemäßen Meßverfahren wird ein Lichtstrahl wie etwa ein Laserstrahl erzeugt, der durch ein diffraktives optisches Element derart moduliert wird, dass ein Beugungsmuster erzeugt wird. Bei diesem Muster kann es sich beispielsweise um ein Gitter, Linien, Kreise oder dergleichen handeln. Das Beugungsmuster wird auf die Oberfläche des zu vermessenden Objekts projiziert. Von dieser Projektion wird eine Abbildung aufgenommen, aus welcher rechnerisch ein Tiefenbild des Objekts rekonstruiert werden kann. Dieses Tiefenbild beinhaltet die Informationen über die relative Tiefe der Oberflächenpunkte des Objekts in Bezug aufeinander oder wahlweise auch in Bezug auf einen vorgegebenen Fixpunkt.

Durch den Einsatz des diffraktiven optischen Elements lassen sich somit Auflichtmuster erzeugen, deren Projektion auf das Objekt durch eine einzige Kamera erfaßbar sind. Die Rekonstruktion des Tiefenbilds kann in Echtzeit durch ein Bildverarbeitungssystem mit Hilfe eines bekannten Verfahrens erfolgen, wie etwa eines Triangulationsverfahrens, bei welchem die Projektionsrichtung des Beugungsmusters und die Richtung, aus der die Oberfläche des Objekts durch die Kamera betrachtet wird, einen Winkel miteinander einschließen.

Der apparative Aufwand des Messsystems ist relativ gering. Grosse Bereiche des Objekts lassen sich schnell und mit sehr hoher Genauigkeit (kleiner als 1 μm) erfassen. Damit ist es ohne weiteres möglich, die räumliche Tiefe jedes Oberflächenpunkts des Objekts zu vermessen und somit ein dreidimensionales Tiefenbild mit hoher Auflösung zu erstellen.

Vorteilhafte Ausgestaltungen dieses Verfahrens ergeben sich aus den Unteransprüchen 2 bis 8.

Die erfindungsgemäße Vorrichtung umfaßt eine Lichtquelle zur Erzeugung eines Lichtstrahls wie etwa eines Laserstrahls, in dessen Strahlengang ein diffraktives optisches Element angeordnet ist, das zur Modulation des Lichtstrahls dient. Das hierdurch erzeugte Beugungsmuster wird durch entsprechende Projektionsmittel auf die Oberfläche des zu vermessenden Objekts projiziert. Eine Kamera dient zur Aufnahme einer Abbildung der Oberfläche des Objekts, und eine daran angeschlossene Recheneinrichtung kann aus der Abbildung das Tiefenbild rechnerisch rekonstruieren.

Vorteilhafte Ausgestaltungen dieser Vorrichtung ergeben sich aus den Ansprüchen 10 bis 18.

Im folgenden werden bevorzugte Ausführungsbeispiele der Erfindung anhand der beigefügten Zeichnung näher erläutert.

Fig. 1        ist eine schematische Darstellung einer Ausführungsform der erfindungsgemäßen Vorrichtung zum optischen Ausmessen ei- nes Werkstücks oder Werkzeugs;

Fig. 2        ist eine Detailansicht des Umlenksystems aus Fig. 1, die die geometrischen Verhält- nisse im Strahlengang verdeutlicht:

Fig. 3        ist eine räumliche Darstellung des Strahlengangs bei der Projektion eines Beugungsgitters auf das zu vermessene Objekt;

Fig. 4 und 5        sind schematische Darstellungen verschiedener Möglichkeiten zum Ausmessen unterschiedlicher Objektbereiche; und

Fig. 6 bis 8        sind geometrische Darstellungen zur Erläuterung des Prinzips der Triangulation.

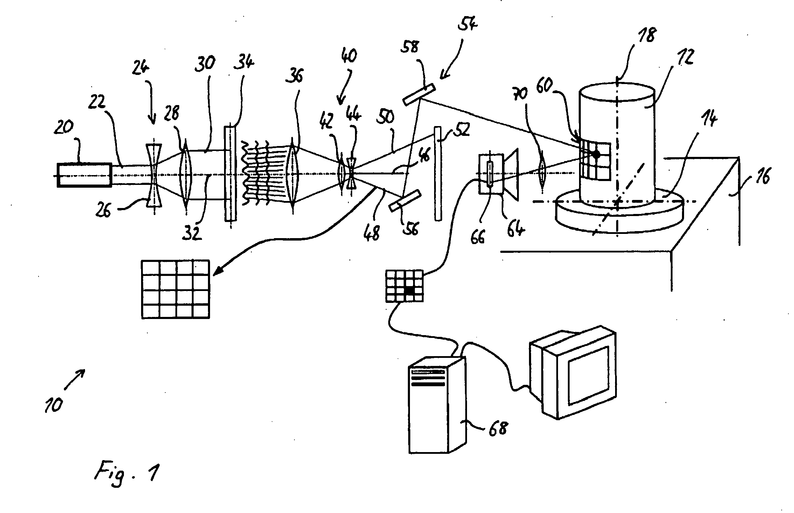

Fig. 1 zeigt eine Messvorrichtung 10 zum optischen Vermessen eines Objekts 12, bei welchem es sich insbesondere um ein Werkstück oder ein Werkzeug handeln kann, das für einen nachfolgenden Fertigungsprozeß eingerichtet wird. Im hier vorliegenden Ausführungsbeispiel handelt es sich bei dem Objekt 12 um eine zylinderförmige Spindel, die in einem Halter 14 eingespannt ist, der auf einem Schlitten 16 sitzt. Der Schlitten ist in zwei Raumrichtungen verfahrbar, die senkrecht zur Spindelachse 18 stehen. Ferner ist das Objekt 12 um die Spindelachse 18 drehbar und läßt sich entlang der Spindelachse 18 aufwärts und abwärts bewegen.

Die Vorrichtung 10 umfaßt im hier vorliegenden Fall einen Laser 20 als Quelle für kohärentes Licht. Der Laserstrahl 22 verläßt den Laser 20 in Fig. 1 nach rechts und passiert eine Linsenanordnung 24, die aus einer Streulinse 26 und einer im Lichtweg dahinter angeordneten Sammellinse 28 besteht. Die Linsenanordnung 24 dient zur Aufweitung des Lichtstrahls 22. Der den Laser 20 verlassene Lichtstrahl 22, der aufgeweitete Lichtstrahl 30 und die Hauptachse der Linsenanordnung 24 liegen auf einer optischen Achse 32 der Vorrichtung 10. Diese optische Achse 32 steht senkrecht auf einer Ebene, die bezüglich der Abbildung des zu vermessenden Objekts 12 die Objektebene repräsentiert.

Der aufgeweitete Lichtstrahl 30 passiert ein diffraktives optisches Element 34, bei welchem es sich um einen Spatial Light Modulator (SLM) handelt. Der Spatial Light Modulator 34 enthält Flüssigkristalle, die elektrisch derart ansteuerbar sind, dass die Intensität oder Phase an jedem Transmissionspunkt der Querschnittsfläche des Lichtstrahls 30 verändert werden kann. Der Flüssigkristall ist somit als Matrix aufgebaut, deren Pixel einzeln adressiert werden können. Der Querschnitt des aufgeweiteten Laserstrahls 30 wird somit räumlich moduliert. Durch die Modulation wird im Lichtweg hinter dem diffraktiven optischen Element 34 ein Beugungsmuster erzeugt. Aufgrund der Ansteuerbarkeit der Pixel des Spatial Light Modulator 34 handelt es sich im vorliegenden Fall um eine dynamische Modulation. Dementsprechend läßt sich das mit 34 bezeichnete Bauteil auch als dynamisches diffraktives optisches Element bezeichnen. Ferner ist es nicht zwangsläufig notwendig, dass das Element 34 in Transmission arbeitet. Auch ein in Reflexion arbeitendes diffraktives optisches Element ist einsetzbar.

Im Lichtweg hinter dem diffraktiven optischen Element 34 ist eine Linse 36 angeordnet, die dazu dient, das durch das diffraktive optische Element 34 erzeugte Beugungsmuster zu fokussieren und zu projizieren. Da die vorstehend beschreibende Modulation des Lichtstrahls 30 durch das diffraktive optische Element 34 auch als Fourieranalyse beschreibbar ist, lässt sich die Linse 36 auch als eine Fourieroptik betrachten, die eine Fouriertransformation des Wellenfelds hinter dem diffraktiven optischen Element 34 durchführt und dieses durch eine Fouriersynthese vom Frequenzraum in den Ortsraum rücktransformiert. Erst hierdurch kommt in der Brennebene der Linse 36 ein sichtbares Bild des Beugungsmusters in verschiedenen Beugungsordnungen zustande.

Dieses Beugungsbild wird durch eine weitere Linsenanordnung 40 vergrößert, die eine Sammellinse 42 und eine Streulinse 44 umfaßt, deren Linsenachsen auf der optischen Achse 32 der Vorrichtung 10 liegen. Hinter dieser Linsenanordnung 40 erscheinen die verschiedenen Beugungsordnungen in unterschiedlichen Projektionsrichtungen. Die nullte (0.) Ordnung, deren Lichtweg mit 46 bezeichnet ist, erscheint auf der optischen Achse 32. Darunter und darüber erscheinen jeweils die erste (1.) Beugungsordnung 48 und die gegenüberliegende -1. Beugungsordnung 50, deren Ausbreitungsrichtungen mit der optischen Achse 32 einen Winkel einschließen.

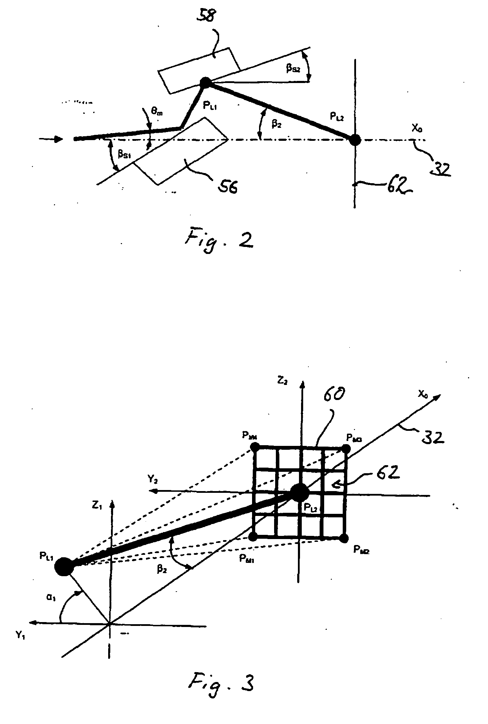

Im vorliegenden Verfahren wird das durch das diffraktive optische Element 34 erzeugte Beugungsmuster lediglich in einer ausgewählten Beugungsordnung 48 auf die Oberfläche des Objekts 12 projiziert, während die übrigen Beugungsordnungen ausgeblendet werden. Hierzu dient eine Blende 52 im Lichtweg der 0. Beugungsordnung 46 und der -1. Beugungsordnung 50. Die Oberfläche der Blende 52 steht senkrecht zur optischen Achse 32. Im vorliegenden Fall wird die erste Beugungsordnung 48 zur Projektion des Beugungsmusters auf die Oberfläche des Objekts 12 ausgewählt. Hierzu dient ein Umlenksystem 54, das zwei Spiegel 56 und 58 umfaßt, welche dazu dienen, das Strahlenbündel der ersten Beugungsordnung 48 auf das Objekt 12 zu werfen. Die Spiegel 56,58 sind entlang des Lichtwegs, das heißt, der Ausbreitungsrichtung 48 des Strahlenbündels der ersten Beugungsordnung angeordnet, in der Weise, dass die erste Beugungsordnung 48 von der Linsenanordnung 40 aus zuerst auf den in Fig. 1 unteren Spiegel 56 fällt, welcher die Beugungsordnung schräg nach oben in Richtung des zweiten Spiegels 58 reflektiert, welcher wiederum das Strahlenbündel unmittelbar auf das Objekt 12 richtet und die Beugungsordnung auf das Objekt 12 projiziert. Bei dieser Abbildung handelt es sich um eine scharfe Projektion des vom diffraktiven optischen Element 34 erzeugten Beugungsmusters auf das Objekt 12. Zur Änderung der Position des Projektionsmusters 60 auf der Oberfläche des Objekts 12 ist zumindest einer der Spiegel, vorzugsweise der obere Spiegel 58, um eine Achse schwenkbar, die senkrecht zur optischen Achse 32 steht (in Fig. 1 senkrecht zur Zeichnungsebene). Wird der Spiegel 58 leicht gekippt, wandert das Projektionsmuster auf dem Objekt 12 nach oben oder unten aus. Auch der untere Spiegel 56 kann schwenkbar angeordnet sein. Die geometrischen Verhältnisse bei der Reflexion eines Strahlenbündels einer bestimmten Ordnung über die beiden Spiegel 56,58 des Umlenksystems 54 auf eine Objektebene 62 sind in Fig. 2 schematisch und für einen von Fig. 1 abweichenden Strahlverlauf dargestellt.

Es kann ferner vorgesehen sein, das Umlenksystem 54 insgesamt um die optische Achse 32 zu drehen, wobei die Position der Spiegel 56 und 58 relativ zueinander konstant bleibt. Die geometrischen Verhältnisse des Strahlengangs sind in Fig. 3 perspektivisch dargestellt. Der Punkt $P_{L1}$ ist hierbei mit dem entsprechenden Punkt $P_{L1}$ in Fig. 2 identisch. Es handelt sich hierbei um den Punkt, an welchem das Strahlenbündel der ausgewählten Beugungsordnung 48 auf den Spiegel 58 trifft. Bei der Projektion auf die Objektebene 62 stellt dieser Punkt $P_{L1}$ die virtuelle Strahlenquelle dar. Von der optischen Achse 32 ist dieser Punkt $P_{L1}$ beabstandet. Während der Drehung des Umlenksystems 54 wandert $P_{L1}$ auf einer gedachten Kreisbahn um die optische Achse 32 herum. Der Drehwinkel ist in Fig. 3 mit $\alpha_1$ bezeichnet. Das Projektionsmuster 60 in der Objektebene 62, im vorliegenden Fall ein Gitterraster mit den Eckpunkten $P_{M1}$, $P_{M2}$, $P_{M3}$ und $P_{M4}$, ändert sich während der Drehung von $P_{L1}$ um $\alpha_1$ um die optische Achse 32 nicht. Es ändert sich jedoch die Richtung, aus der das Beugungsmuster auf die Objektebene 62 projiziert wird. Es läßt sich somit eine Projektionsrichtung auswählen, in der eine Abschattung durch eine Erhebung auf der Oberfläche des Objekts 12 vermieden wird. Es kann sich ferner als nützlich erweisen, durch das Drehen um den Winkel $\alpha 1$ eine andere Beugungsordnung auszuwählen oder verschiedene Abbildungen des Beugungsmusters unter unterschiedlichen Projektionsrichtungen aufzunehmen.

Auf der optischen Achse 32 ist zwischen der Blende 52 und dem Objekt 12 eine Kamera 64 angeordnet, die zur Aufnahme einer Abbildung des auf die Oberfläche des Objekts 12 projizierten Beugungsmusters 60 dient. In der Kamera 64 ist ein CCD-Chip 66 angeordnet, der in der Bildebene einer Linse 70 oder eines Linsensystems liegt, die eine Abbildung des projizierten Beugungsmusters 60 auf dem CCD-Chip 66 erzeugt. Die Beobachtungsrichtung der Kamera 64, entsprechend der optischen Achse des Linsensystems der Kamera 64, fällt mit der optischen Achse 32 des gesamten optischen Systems zusammen. Objektebene 62 und Bildebene des CCD-Chips 66 stehen damit parallel. Bei dem CCD-Chip 66 handelt es sich im wesentlichen um einen Matrixsensor, dessen Pixelelemente durch eine Recheneinrichtung wie etwa einen Personal Computer 68 mit einer entsprechenden Software auslesbar sind. Aus den ausgelesenen Daten läßt sich ein Tiefenbild des Objekts 12 rekonstruieren. Hierzu wird ein bekanntes Verfahren wie beispielsweise ein Triangulationsverfahren verwendet, das im folgenden noch näher beschrieben werden soll.

Es wird angemerkt, dass es sich bei dem projizierten Beugungsmuster 60 nicht zwangsläufig um ein Gitter handeln muß, wie in Fig. 3 dargestellt, sondern das Muster kann beliebig abgewandelt werden. Es kann sich beispielsweise auch um Streifen, Kreise oder dergleichen handeln. Das Beugungsmuster 60 kann auf der Oberfläche des Objekts 12 einen relativ großen Flächenbereich abdecken, der vollständig durch die Abbildung des CCD-Chips 66 erfaßbar ist. Dieser Bereich des Objekts 12 wird vollständig dreidimensional erfaßt, indem jedem Oberflächenpunkt des Objekts 12, der innerhalb des projizierten Beugungsmusters 60 liegt, eine Tiefeninformation zugeordnet wird. Der Begriff "Tiefe" bezeichnet hier den Abstand eines Oberflächenpunkts des Objekts 12 in Richtung der optischen Achse 32 von einem Referenzpunkt, z. B. von der Kamera 64. Bezeichnen z.B. die Koordinaten X und Z die Position des Messpunkts in der Objektebene 62, ist die Tiefe die dazu senkrechte Koordinate Y.

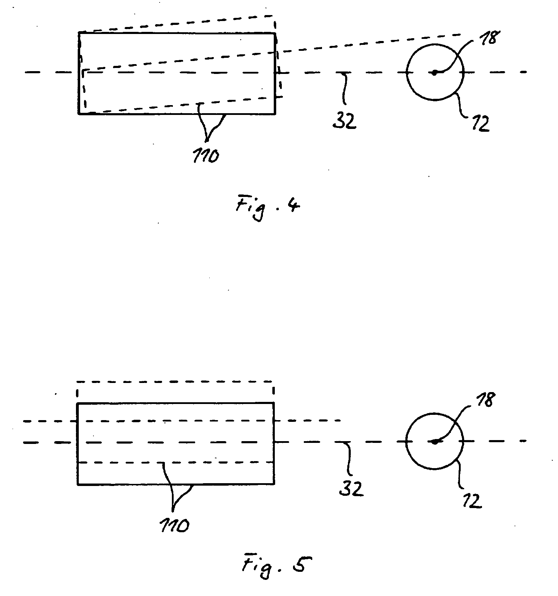

Der Laser 20, die erste Linsenanordnung 24, das diffraktive optische Element 34, die Fourierlinse 36, die zweite Linsenanordnung 40, das Umlenksystem 54 mit der Blende 52 und die Kamera 64 können zu einem Modul 110 zusammengefaßt sein, das in Bezug auf den Schlitten 16 mit dem Halter 14 schwenkbar oder verschiebbar angeordnet ist. Dies ist in den Fig. 4 und 5 schematisch dargestellt. Zur Änderung der Projektionsrichtung kann das Modul 110 um eine Achse schwenkbar sein, die senkrecht zur optischen Achse 32 des gesamten optischen Systems (senkrecht zur Zeichnungsebene in Fig. 4) steht, oder das Modul 110 wird seitlich verschoben, das heißt in eine Richtung senkrecht zur optischen Achse 32. So kann eine Sequenz von Abbildungen erstellt werden, die aus verschiedenen Positionen des Moduls 110 erstellt wurden. Wahlweise ist es möglich, den Schlitten 16 auf die Kamera 64 zu oder von dieser weg zu bewegen, ihn in einer Richtung senkrecht dazu seitlich zu verschieben, das Objekt 12 auf- oder abzubewegen oder um seine Achse 18 zu drehen.

Nachfolgend soll beispielhaft die Durchführung eines Triangulationsverfahrens beschrieben werden.

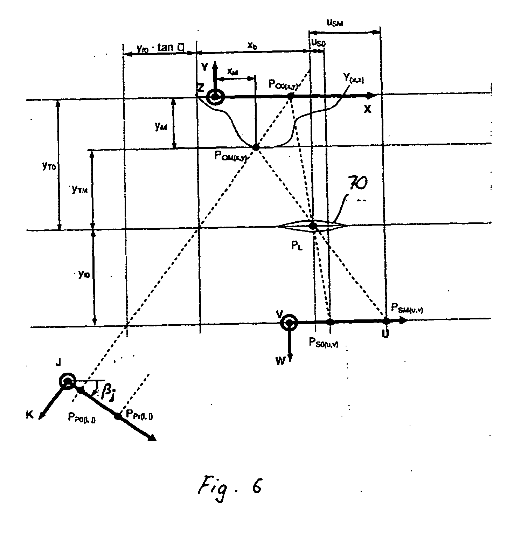

In Fig. 6 liegt die X-Achse des Koordinatensystems XYZ parallel zur Objektebene 62, während die Achse U des Koordinatensystems UVW in der Bildebene der Abbildung liegt, die durch die Linse 70 der Kamera 64 erzeugt wird. Die Abbildung wird auf der Oberfläche des CCD-Chips 66 erzeugt. Das Koordinatensystem IJK ist auf die Projektionsoptik bezogen, wobei die Richtung I um einen Winkel $\beta_j$ im Uhrzeigersinn gegenüber der Achse X des Koordinatensystems XYZ des Messobjekts 12 gedreht ist.

In Fig. 6 sind ferner die folgenden geometrischen Punkte bezeichnet:

$P_L$    bezeichnet den Mittelpunkt der Linse 70;

$P_{O0}$    bezeichnet einen Nullpunkt des Objekts 12 auf der Achse X;

$P_{OM}$    bezeichnet einen Punkt auf der Oberfläche Y des Objekts 12;

$P_{P0}$    ist ein Ausgangspunkt des Strahlbündels der ausgewählten Beugungsordnung, das durch die Projektionsoptik projiziert wird;

Pso    ist der zum Objektpunkt $P_{OM}$ korrespondierende Punkt auf dem CCD-Chip 66.

Ferner sind folgende Strecken gekennzeichnet:

$u_{S0}$    ist der Abstand zwischen einem Basispunkt (entsprechend einem Schnittpunkt des Lots durch $P_L$ und der Achse U) und dem Nullpunkt $P_{S0}$ auf dem CCD-Chip 66 in Richtung U;

$u_{SM}$    ist der Abstand zwischen dem vorstehend genannten Basispunkt und einem Messpunkt $P_{SM}$ auf dem CCD-Chip 66 in Richtung U;

$x_B$    ist der Abstand zwischen der virtuellen Strahlquelle des Strahlbündels der ausgewählten Beugungsordnung und dem Mittelpunkt $P_L$ der Linse, entsprechend der Basis für die Triangulationsberechnung;

$x_M$ und $y_M$    sind Abstandswerte eines bestimmten Messpunkts auf dem Messobjekt 12 in den Richtungen X bzw. Y;

$y_{f0}$    ist der Abstand zwischen dem CCD-Chip 66 und dem Mittelpunkt $P_L$ der Linse 70 in Richtung Y;

$y_{TM}$    ist der Tiefenabstand des Messpunkts $P_{OM}$ (x,y) vom Mittelpunkt $P_L$ der Linse 70 in der Richtung Y; und

$y_{T0}$    ist der Tiefenabstand des Objektnullpunkts $P_{O0}$ (x,y) vom Mittelpunkt $P_L$ der Linse 70 in Richtung Y.

Das Strahlenbündel der ausgewählten Beugungsordnung trifft aus Richtung K der Projektionsoptik (Koordinatensystem IJK) auf das Messobjekt 12. An einem Oberflächenpunkt $P_{OM}$ (x,y) wird das Licht in Richtung der Linse 70 reflektiert, und die Linse 70 bildet den Punkt $P_{OM}$ (x,y) in dem korrespondierenden Punkt $P_{SM}$ (u,v) auf dem CCD-Chip 66 ab. Der Nullpunkt $P_{SO}$ und der Messpunkt $P_{SM}$ auf dem CCD-Chip 66 sind bekannt. Ferner sind die Länge der Triangulationsbasis $x_B$, die Brennweite der Linse 70 $y_{f0}$ und der Winkel $\beta_j$ bekannt.

Die Entfernung des vermessenen Punktes $P_{OM}$ (x,y) von der Linse 70 in der Koordinatenrichtung Y läßt sich dann mit Hilfe des Strahlensatzes wie folgt berechnen:

$$\frac{y_{TM}}{y_{TM} + y_{f0}} = \frac{x_b}{u_{SM} + x_b + y_{f0} \cdot \tan\beta_j}$$

$$y_{TM} = \frac{x_b \cdot y_{f0}}{u_{SM} + y_{f0} \cdot \tan\beta_j}$$

In entsprechender Weise läßt sich die Entfernung $y_{T0}$ eines Nullpunktes in Richtung Y berechnen:

$$\frac{y_{T0}}{y_{T0} + y_{f0}} = \frac{x_b}{u_{S0} + x_b + y_{f0} \cdot \tan\beta_j}$$

$$y_{T0} = \frac{x_b \cdot y_{f0}}{u_{S0} + y_{f0} \cdot \tan\beta_j}$$

Aus der Differenz dieser Werte $y_{T0}$ und $y_{TM}$ läßt sich dann die Tiefe $y_M$ in der Richtung Y des Objektmesspunkts $P_{OM}$ erhalten.

$$y_M = y_{T0} - y_{TM}$$

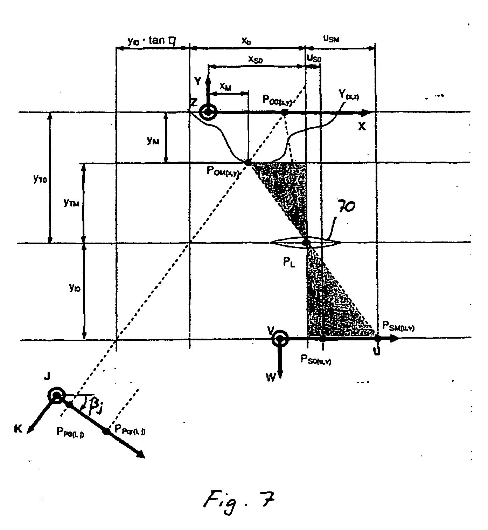

Der Abstand $X_M$ des Messpunkts $P_M$ (x,y) in der Richtung X läßt sich aus Fig. 7 herleiten. Der Abstand $x_{S0}$, der den Abstand des Punktes $P_L$ vom Koordinatenursprung in Richtung X bezeichnet, ist bekannt. Nach dem Prinzip der ähnlichen Dreiecke (in Fig. 7 schattiert dargestellt) läßt sich folgende Beziehung herleiten:

$$\frac{x_{S0} - x_M}{y_{TM}} = \frac{u_{SM}}{y_{f0}}$$

Umformen nach $x_M$ ergibt:

$$x_M = x_{S0} - u_{SM} \frac{y_{TM}}{y_{f0}}$$

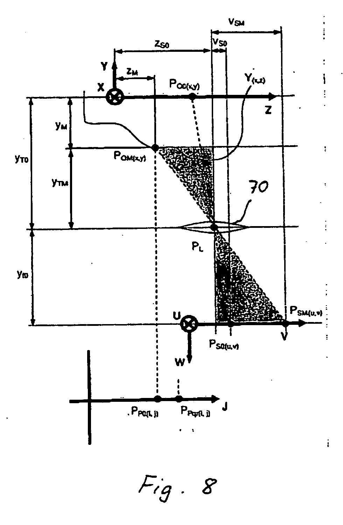

Fig. 8 ist eine Darstellung zur Herleitung des Abstandes $z_M$ des Messpunktes $P_{OM}$ in der Richtung Z. Die Blickrichtung des Beobachters ist hierbei um 90° gegenüber Fig. 7 gedreht, so dass die Achsen X und U der Koordinatensysteme XYZ bzw. UVW senkrecht zur Zeichnungsebene stehen. Gemessen wird die Position $v_{SM}$ der Zeile des CCD-Chips 66, in der der Messpunkt $P_{OM}$ abgebildet wird. Der Abstand $z_{S0}$ des Punktes $P_L$ der Linse 70 vom Ursprung des Koordinatensystems XYZ in der Richtung Z ist bekannt. Damit ergibt sich folgende Beziehung:

$$\frac{z_{S0} - z_M}{y_{TM}} = \frac{v_{SM}}{y_{f0}}$$

$$z_M = z_{S0} - v_{SM} \frac{y_{TM}}{y_{f0}}$$

Damit liegen alle Größen $x_M$, $y_M$, $z_M$ vor, die die dreidimensionale Position eines Oberflächenpunktes im Raum definieren.

Für jeden Punkt des Beugungsmusters auf der Oberfläche des Objekts 12 kann die Bestimmung von $X_M$, $y_M$, $z_M$ zeitgleich durch die Recheneinrichtung durchgeführt werden. Es versteht sich, dass das oben genannte Verfahren durch die Anwendung einer Codierung von Messstreifen im Muster oder dergleichen ergänzt werden kann, wie etwa durch einen binären Gray-Code, der das eindeutige Erkennen benachbarter Strahlbündel in der Projektion ermöglicht. Außer der Triangulation sind auch andere Verfahren einsetzbar, wie beispielsweise ein interferometrisches Verfahren oder dergleichen. Denkbar ist auch der Einsatz eines holographischen Verfahrens, bei welchem die Abbildung durch die Überlagerung des von der Oberfläche des Objekts 12 gestreuten bzw. reflektierten Lichts der darauf projizierten Beugungsordnung mit einem Referenzstrahl erzeugt wird, der nicht vom Objekt 12 stammt. Dieser Referenzstrahl kann von dem zur Projektion auf das Objekt 12 vorgesehenen Strahlbündel abgezweigt und unmittelbar auf die Kamera 64 gerichtet werden.

Vor dem eigentlichen Meßvorgang, also vor der Projektion des Beugungsmusters auf das zu vermessende Objekt 12, wird eine Kalibrierung durchgeführt, bei welcher an Stelle des zu vermessenden Objekts 12 eine sogenannte Kalibrierlehre positioniert wird, die ein geometrisches Merkmal aufweist, dessen Koordinaten im Raum bekannt sind. Bei diesem Merkmal kann es sich beispielsweise um eine Referenzkante handeln. Das Beugungsmuster wird auf die Kalibrierlehre projiziert, und es wird eine Abbildung dieser Projektion mit Hilfe der Kamera 64 aufgenommen, wie bereits oben im Zusammenhang mit dem Meßvorgang hinlänglich beschrieben wurde. Da die Raumkoordinaten des geometrischen Merkmals bekannt sind, können diese mit der Abbildung des geometrischen Merkmals in Beziehung gesetzt werden. Damit werden den Koordinaten des Merkmals Absolutwerte zugeordnet. Während zur Kalibrierung in der Breitenrichtung X als Kalibrierlehre ein Meßobjekt mit bekannten geometrischen Abmessungen verwendet wird, das beispielsweise kugel- oder zylinderförmig sein kann, wird zur Kalibrierung in der Tiefenrichtung Y ein flächiges Objekt verwendet, das eine planparallele Oberfläche in der X-Z-Richtung und einen Abstand 0 in der Y-Richtung zum Nullpunkt des Koordinatensystems XYZ aufweist. Das Teilstrahlbündel, das auf einen Referenzpunkt der Kalibrierlehre fällt, erzeugt in der Abbildung auf dem CCD-Chip 66 des Matrixsensors und ein Beleuchtungsmaximum, dessen Ort auf dem CCD-Chip 66 sich mit dem Referenzpunkt auf der Oberfläche der Kalibrierlehre in Beziehung setzen läßt.

Es ist denkbar, das vorstehend beschriebene optische Meßverfahren mit einem Verfahren zur Oberflächenbearbeitung des vermessenen Objekts 12 zu kombinieren. Hierzu läßt sich ein Laser mit hoher Energie einsetzen, der derart auf die Objektoberfläche fokussiert wird, dass im Fokus Material abgetragen wird, bis an dieser Stelle eine vorgesehene Tiefe erreicht wird. Das Ausmaß der Materialabtragung, das einer Differenz zwischen einer Soll-Tiefe und der Ist-Tiefe vor der Bearbeitung entspricht, wird durch eine Messung festgelegt, die anhand des erfindungsgemäßen optischen Meßverfahrens durchgeführt werden kann. Im übrigen kommt in Betracht, für ein Objektbearbeitungsverfahren den in Fig. 1 beschriebenen Aufbau auf die folgende Weise zu nutzen. Wird als Lichtquelle 20 ein hinreichend energiereicher Laser eingesetzt, kann dessen Lichtstrahl 22 durch das diffraktive optische Element 34 derart moduliert werden, dass ein energiereiches Beugungsmuster 60 zur Projektion auf die Oberfläche des Objekts 12 erzeugt wird. Bei der Projektion wird dann auf die vorstehend beschriebene Weise Material an den Stellen abgetragen, an denen das Beugungsmuster 60 eine ausreichende Intensität aufweist. So wird ein Bearbeitungsmuster auf der Objektoberfläche hinterlassen. Das Ausmessen des Objekts durch das erfindungsgemäße Meßverfahren stellt hierbei lediglich eine Option dar, auf die gegebenenfalls verzichtet werden kann.

**Patentansprüche**

1. Verfahren zum Einrichten eines Werkzeugs, welches Verfahren die optische Vermessung des Werkzeugs umfaßt, für die ein kohärenter Laserstrahl (22) erzeugt wird,

   der Laserstrahl (22) durch ein dynamisches diffraktives optisches Element (34) derart moduliert wird, dass ein Beugungsmuster (60) entsprechend einer Ansteuerung des dynamischen diffraktiven optischen Elements (34) erzeugt wird, wobei:

   das Beugungsmuster (60) lediglich in einer ausgewählten Beugungsordnung (48) auf die Oberfläche des Objekts (12) projiziert wird,
   eine Sequenz von Abbildungen des auf die Oberfläche des Objekts (12) projizierten Beugungsmusters (60) aufgenommen wird
   aus jeder Abbildung der Sequenz rechnerisch ein Tiefenbild des Objekts (12) rekonstruiert wird,
   die ausgewählte Beugungsordnung (48) durch ein Umlenksystem (54) in Richtung der Oberfläche des Objekts (12) umgelenkt wird,
   und zwischen zwei aufeinanderfolgenden Aufnahmen einer Sequenz das Objekt (12) gedreht oder in einer Richtung parallel zu einer Objektebene (62) verschoben wird oder das Umlenksystem (54) gedreht wird.

2. Verfahren gemäß Anspruch 1, **dadurch gekennzeichnet, dass** das Umlenksystem (54) eine Anzahl entlang des Lichtwegs aufeinander folgender Spiegelelemente (56,58) umfasst.

3. Verfahren gemäß Anspruch 2, **dadurch gekennzeichnet, dass** die Position des projizierten Beugungsmusters (60) auf der Oberfläche des Objekts (12) durch Schwenken zumindest eines Spiegelelements (56,58) veränderbar ist.

4. Verfahren gemäß Anspruch 2 oder 3, **dadurch gekennzeichnet, dass** die Projektionsrichtung, aus welcher die ausgewählte Beugungsordnung (48) auf die Oberfläche des Objekts (12) projiziert wird, durch Drehen des Umlenksystems (54) um eine optische Achse (32) veränderbar ist, die senkrecht zu einer Objektebene (62) steht, welche parallel zur Abbildungsebene der Abbildung des Beugungsmusters (60) steht.

5. Verfahren gemäß Anspruch 4, **dadurch gekennzeichnet, dass** die Abbildung durch eine Kamera (64) aufgenommen wird, die auf der optischen Achse (32) angeordnet ist.

6. Verfahren gemäß einem der vorhergehenden Ansprüche, **dadurch gekennzeichnet, dass** das durch das diffraktive optische Element (34) modulierte Licht durch eine Fourieroptik (36) zur Projektion des Beugungsmusters in den Ortsraum rücktransformiert wird.

7. Verfahren gemäß einem der vorhergehenden Ansprüche, **dadurch gekennzeichnet, dass** die Rekonstruktion des Tiefenprofils durch Triangulation erfolgt.

8. Verfahren gemäß einem der vorhergehenden Ansprüche, **dadurch gekennzeichnet, dass** vor der Projektion eines Beugungsmusters (60) auf die Oberfläche des zu vermessenden Objekts (12) eine Kalibrierung durchgeführt wird, umfassend die Positionierung einer Kalibrierlehre anstelle des zu vermessenden Objekts (12), welche Kalibrierlehre zumindest ein geometrisches Merkmal mit bekannten Raumkoordinaten aufweist, die Projektion eines Beugungsmusters auf die Kalibrierlehre, die Aufnahme einer Abbildung des projizierten Beugungsmusters und die rechnerische Zuordnung der Abbildung des geometrischen Merkmals zu seinen Raumkoordinaten.

9. Vorrichtung zum Einrichten eines Werkzeugs, welche Vorrichtung Einrichtungen zum optischen Vermessen des Werkzeugs umfaßt,
   umfassend einen Laser (20) zur Erzeugung eines kohärenten Lichtstrahls (22),
   ein im Strahlengang der Lasers (20) angeordnetes dynamisches diffraktives optisches Element (34) zur dynamischen Modulation des Laserstrahls (22) entsprechend einer Ansteuerung des dynamischen diffraktiven optischen Elements (34).
   Mittel zur Projektion eines durch das dynamische diffraktive optische Element (34) erzeugten Beugungsmusters (60) auf die Oberfläche des Objekts (12), eine Kamera (64) zur Aufnahme einer Sequenz von Abbildungen der Oberfläche des Objekts (12)
   und eine Recheneinrichtung (68) zur rechnerischen Rekonstruktion von Tiefenbildern der Oberfläche des Objekts (12) aus den Abbildungen der Sequenz, **gekennzeichnet durch** im Lichtweg hinter dem dynamischen diffraktiven optischen Element (34) angeordnete Mittel zur Auswahl einer Beugungsordnung (48) des Beugungsmusters (60), die zur Projektion auf die Oberfläche des Objekts (12) vorgesehen ist, und **durch** Mittel (52) zum Abblenden der nicht ausgewählten übrigen Beugungsordnungen (46,50) sowie **durch** ein Umlenksystem (54) zum Umlenken der ausgewählten Beugungsordnung (48) in Richtung der Oberfläche des Objekts (12), welches Umlenksystem (54) um eine optische Achse (32) drehbar ist, die senkrecht zu einer Objektebene (64) steht, welche parallel zur Abbildungsebene der Abbildung des Beugungsmusters (60) steht,

sowie **durch** eine Halterung (14) zum Einspannen des Objekts (12), welche Halterung (14) zum Drehen des Objekts (12) um eine Achse (18) senkrecht zur optischen Achse (32) und/oder zum linearen Bewegen des Objekts (12) in einer Richtung senkrecht zur optischen Achse (32) vorgesehen ist.

10. Vorrichtung gemäß Anspruch 9, **dadurch gekennzeichnet, dass** das dynamische diffraktive optische Element (34) ein Spatial Light Modulator (SLM) ist.

11. Vorrichtung gemäß einem der Ansprüche 9 oder 10, **dadurch gekennzeichnet, dass** das Umlenksystem (54) eines oder mehrere entlang des Lichtwegs aufeinander folgende Spiegelelemente (56,58) umfasst.

12. Vorrichtung gemäß Anspruch 11, **dadurch gekennzeichnet, dass** zumindest eines der Spiegelelemente (56,58) um eine Achse schwenkbar ist, die senkrecht zur optischen Achse (32) steht.

13. Vorrichtung gemäß einem der Ansprüche 11 oder 12, **dadurch gekennzeichnet, dass** das Umlenksystem (54) zwei Spiegelelemente (56,58) umfasst, und dass der Lichtweg vom ersten (56) zum zweiten Spiegelelement (58) die optische Achse (32) kreuzt.

14. Vorrichtung gemäß einem der Ansprüche 9 bis 13, **gekennzeichnet durch** eine Fourieroptik (36), die im Lichtweg hinter dem diffraktiven optischen Element (34) zur Projektion des Beugungsmusters (60) in den Ortsraum angeordnet ist.

15. Vorrichtung gemäß Anspruch 14, **dadurch gekennzeichnet, dass** die Fourieroptik zumindest eine Linse (36) umfasst.

16. Vorrichtung gemäß Anspruch 14 oder 15, **dadurch gekennzeichnet, dass** im Lichtweg hinter der Fourieroptik (36) eine weitere Linsenanordnung (40) zur Vergrößerung der ausgewählten Beugungsordnung (48) angeordnet ist.

17. Vorrichtung gemäß einem der Ansprüche 9 bis 16, **dadurch gekennzeichnet, dass** im Lichtweg vor dem diffraktiven optischen Element (34) eine Linsenanordnung (24) zur Aufweitung des Laserstrahls (22) angeordnet ist.

18. Vorrichtung gemäß einem der Ansprüche 9 bis 17, **dadurch gekennzeichnet, dass** in der Bildebene der Kamera (64) ein CCD-Chip (66) als Matrixsensor angeordnet ist, dessen Bildinformationen durch die Recheneinrichtung (68) auslesbar sind.

## Claims

1. Method for setting a tool, comprising the optical measurement of said tool using a coherent laser beam (22), wherein said laser beam (22) is modulated by means of a dynamic diffractive optical element (34) such that a diffraction pattern (60) is produced according to the control of said dynamic diffractive optical element (34), wherein said diffraction pattern (60) is projected just in one selected diffraction order (48) onto the surface of the object (12), a sequence of images of the diffraction pattern (60) projected on the surface of said object (12) is captured, and a depth image of said object (12) is reconstructed by computing from each image of said sequence, wherein said selected diffraction order (48) is deflected by means of deflection system (54) towards the surface of said object (12), and said object (12) is turned or shifted in a direction parallel to an object plane (62) or the deflection system (54) is turned between two subsequent images of said sequence.

2. Method according to claim 1, **characterized in that** said deflection system (54) comprises a plurality of subsequent mirror elements (56,58) along the light path.

3. Method according to claim 2, **characterized in that** the position of the diffraction pattern (60) projected onto the surface of said object (12) can be changed by pivoting at least one of said mirror elements (56,58).

4. Method according to claim 2 or 3, **characterized in that** the projection direction from which the selected diffraction order (48) is projected onto the surface of said object (12) can be changed by turning the deflection system (54) around and optical axis (32) that stands perpendicular to an object plane (62) that is parallel with respect to the imaging plane of the image of the diffraction pattern (60).

5. Method according to claim 4, **characterized in that** the image is captured by a camera (64) that is arranged on said optical axis (32).

6. Method to one of the preceding claims, **characterized in that** the light modulated by said diffractive optical element (34) is retransformed by a fourier optics (36) for projecting the diffraction pattern back into the position space.

7. Method according to one of the preceding claims, **characterized in that** the reconstruction of the depth profile is provided by means of a triangulation method.

8. Method according to one of the preceding claims, **characterized in that** before projecting said diffraction pattern (60) onto the surface of the object (12) to be measured, a calibration step is carried out, said calibration step comprising positioning a calibration gauge at the position of the object (12) to be measured, said calibration gauge comprising at least one geometric feature with known space coordinates, projecting a diffraction pattern onto the calibration gauge, capturing and image of the projected diffraction pattern and a numerical correlation of the image of the geometric feature to its space coordinates.

9. Apparatus for setting a tool, said apparatus comprising means for optical measuring said tool,
   further comprising a laser (20) for generating a coherent light beam (22),
   a dynamic diffractive optical element (34) positioned in the beam path of said laser (20) for dynamic modulation of said laser beam (22) according to a control of said dynamic diffractive optical element (34),
   means for projecting a diffraction pattern (60) generated by said dynamic diffractive optical element (34) onto the surface of the object (12), a camera (64) for capturing a sequence of images of the surface of the object (12),
   and a computing means (68) for numerical reconstruction of depth images of the surface of the object (12) of the images of the sequence,
   **characterized by** means for selecting one diffraction order (48) of said diffraction pattern (60) for projection on the surface of the object (12), said selecting means being arranged in the light path behind said dynamic diffractive optical element (34), and by means (52) for blocking the remaining non-selected diffraction orders (46,50), as well as by a deflection systems (54) for deflecting the selected diffractive order (48) into the direction of the surface of the object (12), said deflection system (54) being pivotable around an optical axis (32) perpendicular to an object plane (64) that stands parallel with respect to the imaging plane of the image of the diffraction pattern (60),
   as well as by a support (14) for fixing said object (12),
   said support (14) being provided for turning said object (12) around an axis (18) perpendicular to said optical axis (32) and/or for shifting said object (12) in a linear direction perpendicular to said optical axis (32).

10. Apparatus according to claim 9, **characterized in that** said dynamic diffractive optical element (34) is a spatial light modulator (SLM).

11. Apparatus according to one of claims 9 or 10, **characterized in that** said deflection system (54) comprises one or more mirror elements (56,58) subsequent along the light path.

12. Apparatus according to claim 11, **characterized in that** at least one of the mirror elements (56,58) is pivotable around an axis perpendicular to said optical axis (32).

13. Apparatus according to one of claims 11 or 12, **characterized in that** said deflection system (54) comprises two mirror elements (56,58), wherein the light path from the first mirror element (56) to the second of these mirror elements (58) crosses the optical axis (32).

14. Apparatus to one of claims 9 to 13, **characterized by** a fourier optics, positioned in the light path behind the diffractive optical element (34) for projecting the diffraction pattern (60) into the position space.

15. Apparatus according to claim 14, **characterized in that** said fourier optics comprises at least one lens (36).

**16.** Apparatus according to claim (14) or (15), **characterized in that** another lens arrangement (40) is provided in the light path behind the fourier optics (36) for enlarging the selected diffraction order (48).

**17.** Apparatus according to one of claims 9 to 16, **characterized in that** a lens arrangement (24) for widening the laser beam (22) is arranged in the light path in front of the diffractive optical element (34).

**18.** Apparatus according to one of claims 9 to 17, **characterized in that** a CCD-chip (66) is arranged as a matrix sensor within the imaging plane of the camera (64), the image information of said CCD-chip being readable by a computing device (68).

**Revendications**

**1.** Procédé de réglage d'un outil, lequel procédé comporte la mesure optique de l'outil pour laquelle un faisceau laser cohérent (22) est généré,
le faisceau laser (22) est modulé par un élément optique dynamique diffringent (34) de telle sorte qu'une figure de diffraction (60) correspondant à une excitation de l'élément optique dynamique diffringent (34) est générée, comportant les étapes consistant à :

projeter uniquement la figure de diffraction (60) sur la surface de l'objet (12) à un ordre de diffraction sélectionné (48),
enregistrer une séquence d'images de la figure de diffraction (60) projetée sur la surface de l'objet (12),
reconstruire numériquement une image de profondeur de l'objet (12) à partir de chaque image de la séquence,
rediriger l'ordre de diffraction sélectionné (48) vers la surface de l'objet (12) par l'intermédiaire d'un système de déviation (54),
et faire tourner l'objet (12) entre deux enregistrements consécutifs d'une séquence, ou déplacer dans une direction parallèle à un plan d'objet (62) ou faire tourner le système de déviation (54).

**2.** Procédé selon la revendication 1, **caractérisé en ce que** le système de déviation (54) comporte une pluralité d'éléments de miroir (56, 58) consécutifs le long du trajet optique.

**3.** Procédé selon la revendication 2, **caractérisé en ce que** la position de la figure de diffraction projetée (60) sur la surface de l'objet (12) peut être changée en faisant pivoter au moins un élément de miroir (56, 58).

**4.** Procédé selon la revendication 2 ou 3, **caractérisé en ce que** la direction de projection, à partir de laquelle le système de diffraction sélectionné (48) est projeté sur la surface de l'objet (12), peut être changée en faisant tourner le système de déviation (54) autour d'un axe optique (32) perpendiculaire à un plan d'objet (62), lequel plan d'objet est parallèle à un plan d'imagerie de l'image de la figure de diffraction (60).

**5.** Procédé selon la revendication 4, **caractérisé en ce que** l'image est enregistrée par une caméra (64) agencée sur l'axe optique (32).

**6.** Procédé selon l'une quelconque des revendications précédentes, **caractérisé en ce que** la lumière modulée par l'élément optique diffringent (34) est retransformée par un composant optique de Fourier (36) pour la projection de la figure de diffraction dans le domaine spatial.

**7.** Procédé selon l'une quelconque des revendications précédentes, **caractérisé en ce que** la reconstruction du profil de profondeur est effectuée par triangulation.

**8.** Procédé selon l'une quelconque des revendications précédentes, **caractérisé en ce qu'**un calibrage est réalisé avant la projection d'une figure de diffraction (60) sur la surface de l'objet à mesurer (12), comportant les étapes consistant à positionner un calibre à la place de l'objet à mesurer (12), lequel calibre présente au moins une caractéristique géométrique avec des coordonnées spatiales connues, projeter une figure de diffraction sur le calibre, enregistrer une image de la figure de diffraction projetée et associer numériquement l'image de la caractéristique géométrique à ses coordonnées spatiales.

**9.** Dispositif de réglage d'un outil, lequel dispositif inclut un dispositif de mesure optique de l'outil,
comportant un laser (20) pour générer un faisceau lumineux cohérent (22),

un élément optique dynamique diffringent (34) agencé dans le trajet de faisceau du laser (20) pour la modulation dynamique du faisceau laser (22) en fonction d'une excitation de l'élément optique dynamique diffringent (34),
des moyens pour projeter une figure de diffraction (60) générée par l'élément optique dynamique diffringent (34) sur la surface de l'objet (12),
une caméra (64) pour enregistrer une séquence d'images de la surface de l'objet (12),
et un dispositif de calcul (68) pour reconstruire numériquement des images de profondeur de la surface de l'objet (12) à partir des images de la séquence, **caractérisé par** des moyens agencés dans le trajet optique derrière l'élément optique dynamique diffringent (34) afin de sélectionner un ordre de diffraction (48) de la figure de diffraction (60), lequel ordre de diffraction est prévu pour être projeté sur la surface de l'objet (12), et par des moyens (52) pour réduire les ordres de diffraction restants non sélectionnés (46, 50), ainsi que par un système de déviation (54) pour rediriger l'ordre de diffraction sélectionné (48) vers la surface de l'objet (12), lequel système de déviation (54) peut tourner autour d'un axe optique (32) perpendiculaire à un plan d'objet (64), lequel plan d'objet est parallèle à un plan d'imagerie de l'image de la figure de diffraction (60),
ainsi que par un support (12) pour un serrage de l'objet (12),
lequel support (14) est prévu pour faire tourner l'objet (12) autour d'un axe (18) perpendiculaire à l'axe optique (32) et/ou pour déplacer linéairement l'objet (12) dans une direction perpendiculaire à l'axe optique (32).

10. Dispositif selon la revendication 9, **caractérisé en ce que** l'élément optique dynamique diffringent (34) est un modulateur spatial de lumière.

11. Dispositif selon l'une quelconque des revendications 9 ou 10, **caractérisé en ce que** le système de déviation (54) comporte un ou plusieurs éléments de miroir (56, 58) consécutifs le long du trajet optique.

12. Dispositif selon la revendication 11, **caractérisé en ce qu'**au moins un des éléments de miroir (56, 58) peut pivoter autour d'un axe perpendiculaire à l'axe optique (32).

13. Dispositif selon l'une quelconque des revendications 11 ou 12, **caractérisé en ce que** le système de déviation (54) comporte deux éléments de miroir (56, 58), et **en ce que** le trajet optique du premier (56) au second (58) élément de miroir croise l'axe optique (32).

14. Dispositif selon l'une quelconque des revendications 9 à 13, **caractérisé par** un composant optique de Fourier (36) qui est agencé dans le trajet optique derrière l'élément optique diffringent (34) pour projeter la figure de diffraction (60) dans le domaine spatial.

15. Dispositif selon la revendication 14, **caractérisé en ce que** le composant optique de Fourier comporte au moins une lentille (36).

16. Dispositif selon la revendication 14 ou 15, **caractérisé en ce qu'**un ensemble de lentille supplémentaire (40) est agencé dans le trajet optique derrière le composant optique de Fourier (36) de manière à augmenter l'ordre de diffraction sélectionné (48).

17. Dispositif selon l'une quelconque des revendications 9 à 16, **caractérisé en ce qu'**un ensemble de lentille (24) est agencé dans le trajet optique avant l'élément optique diffringent (34) de manière à élargir le faisceau laser (22).

18. Dispositif selon l'une quelconque des revendications 9 à 17, **caractérisé en ce que** dans le plan d'image de la caméra (64) est agencée une puce CCD (66) sous forme de capteur matriciel, dont les informations d'image peuvent être lues par le dispositif de calcul (68).

Fig. 1

Fig. 2

Fig. 3

Fig . 4

Fig . 5

Fig. 6

Fig. 7

Fig. 8

**IN DER BESCHREIBUNG AUFGEFÜHRTE DOKUMENTE**

**In der Beschreibung aufgeführte Patentdokumente**

- DE 10321888 A1
- WO 2006134793 A1
- US 6040910 A
- DE 202005003352
- EP 1726914 A2
- EP 1242786 A